# EUROPÄISCHE PATENTANMELDUNG

(11) **EP 2 130 893 A2**
(43) Veröffentlichungstag der Anmeldung: **09.12.2009**
(21) Anmeldenummer: 09007276.0
(22) Anmeldetag: 02.06.2009
(51) Int. Cl.: C10B 53/02, C10L 5/44

(54) **Verfahren zum Herstellen von Kohle insbesondere von Kohleschlamm**

(30) Priorität: 05.06.2008 DE 102008026991; 30.09.2008 DE 102008049737
(71) Anmelder: TerraNova Energy GmbH & Co. KG, 40231 Düsseldorf (DE)
(72) Erfinder: Buttmann, Marc, 40231 Düsseldorf (DE); Bottinger, Michael, Dr., 55767 Brücken (DE)
(74) Vertreter: COHAUSZ DAWIDOWICZ HANNIG & SOZIEN

(57) **Zusammenfassung**

Die Erfindung betrifft ein Verfahren zum Herstellen von Kohle insbesondere von Kohleschlamm aus feuchter Biomasse insbesondere aus Klärschlamm durch hydrothermale Karbonisierung, wobei die Kohlenstoffstrukturen der Biomasse, vorzugsweise bei mindestens 180 bis 200 °C unter Luftabschluss aufgebrochen werden, insbesondere im Batchbetrieb, wobei vor der hydrothermalen Karbonisierung die Biomasse durch Entwässerung auf Werte über 10 % Trockensubstanzanteil aufkonzentriert wird, dass vor der hydrothermalen Karbonisierung die Biomasse auf einen pH-Wert kleiner 4 gebracht wird, wenn der pH-Wert über 4 liegt, und dass die durch die hydrothermale Karbonisierung entstandene Prozess-Abwärme zum anschließenden Trocknen des entstandenen Produkts verwendet wird.

## Beschreibung

Die Erfindung betrifft ein Verfahren zum Herstellen von Kohle insbesondere von Kohleschlamm aus feuchter Biomasse insbesondere aus Klärschlamm durch hydrothermale Karbonisierung, wobei die Kohlenstoffstrukturen der Biomasse vorzugsweise bei mindestens 180 bis 200°C unter Luftabschluss aufgebrochen werden insbesondere im Batchbetrieb. Ferner betrifft die Erfindung eine Vorrichtung zum Durchführen des Verfahrens.

Das Verfahren basiert auf der hydrothermalen Karbonisierung (HTC), wie sie von Prof. Dr. Marcus Antonietti am Max Planck Institut für Kolloid- und Grenzflächenforschung in Potsdam entwickelt wurde. Dieses wurde beispielsweise im Magazin "MaxPIanckForschung" 2/2006 beschrieben. Bei der HTC wird unter Luftabschluss bei Temperaturen um die 200°C über 12 Stunden feuchte Biomasse in einen Kohleschlamm gewandelt. Dieser kann anschließend getrocknet und stofflich genutzt werden. Das Verfahren wird zum Beispiel in DE 102007012112 B3 in einem kontinuierlichen Prozess eingesetzt. In DE 102007062809 A1 und in DE 102007012112 B3 wird die Zugabe von Säuren zur Erniedrigung des pH-Wertes als vorteilhaft beschrieben.

### Die beschriebenen Verfahren haben einige erhebliche Nachteile:

Da es sich bei der HTC um einen hermetisch abgeschlossenen Prozess handelt, bestimmt die Zusammenstellung der Eingangsstoffe direkt die Eigenschaft des Endproduktes. Durch die Verwendung von feuchter Biomasse, insbesondere Biomasse-Reststoffen, besteht damit eine natürliche Schwankung der Eigenschaften des Endproduktes. Wenn das Endprodukt Mindestanforderungen an eine Weiterverwertung erfüllen muss, können diese Schwankungen zu Produktverwerfungen und damit einer Reduzierung der Ausbeute des Prozesses führen.

So treten z. B. Bei der HTC von Klärschlamm erhebliche Unterschiede im Verhältnis der organischen und der mineralischen Trockensubstanzanteile auf. Entsprechend kann der Brennwert des getrockneten Ausgangsstoffes der HTC im Brennwert zwischen 10,000 J/g und 25,000 J/g schwanken. Werden dagegen Lebensmittelreste einer HTC zugeführt, können aufgrund des höheren Kohlehydratanteils Brennwerte zwischen 20,000 J/g und 30,000 J/g erreicht werden. Um die Ausgangsstoffe nach der HTC wirtschaftlich verwerten zu können, müssen diese jedoch üblicherweise mindestens Brennwerte von Braunkohle aufweisen, die im getrockneten Zustand etwa 20,000 J/g hat. Dies ist nach bisherigem Stand der Technik bei schwankenden Qualitäten der Eingangsstoffe nicht sicherzustellen.

Die Verwendung eines kontinuierlichen Verfahrens im Rohrreaktor hat für die HTC auch beträchtliche Nachteile: Durch die gleichzeitigen Prozessschritte "Vermischung/Homogenisierung" und "Transport" treten im Reaktionsvolumen Rückvermischungen auf, die zu einem breiten Verweilzeitspektrum und einem schlecht definierten Prozessablauf führen. Die Eigenschaften des erzeugten Produkts sind daher hier auch nur schwer standardisierbar.

Des Weiteren ist die Abdichtung einer kontinuierlich arbeitenden Anlage problematisch. Die Karbonisierung findet bei hohen Drücken statt, daraus ergibt sich das Problem der Abdichtung des Materialeintrags und -austrags. Feststoffanlagerungen an den Bauteilen sind nicht zu verhindern und bedingen, dass beispielsweise Ventile redundant geschaltet werden müssen.

Weiterhin ergeben sich während der HTC große technische Probleme aufgrund der sehr unterschiedlichen Viskositäten der Eingangsstoffe. Es können dadurch hohe mechanische Belastungen der Transportwellen auftreten bis hin zu Stocken des Materialtransports. So ist z. B. ein Klärschlamm, der auf 30 % Feststoffgehalt vorgetrocknet ist und wegen der enthaltenen Hydrokolloide eine sehr hohe Festigkeit aufweist nicht ohne weiteren Zusatz von Wasser zu transportieren oder zu vermischen.

Wird der Prozess durch eine Zugabe von Säure und die damit verbundene Reduktion des pH-Wertes unterstützt, ergeben sich durch die Chemikalienkosten erheblich höhere Betriebskosten. Diese können dazu führen, dass die Anlagen für bestimmte Biomassen nicht mehr rentabel betrieben werden können.

Aufgabe der Erfindung ist es, das Verfahren zur hydrothermalen Karbonisierung von Biomasse erheblich zu verkürzen bei geringem apparativen Aufwand, kompakter Anlage und wirtschaftlicher Arbeitsweise. Ferner ist es Aufgabe der Erfindung, Biomassen mit unterschiedlichen und schwankenden Eigenschaften mittels der HTC in eine Kohle umzuwandeln, die eine gleich bleibende und für nachfolgende Verwendungen ausreichende Qualität aufweist. Weiterhin sollen durch die gezielte Verwendung bestimmter Eingangsstoffe die Betriebskosten, insbesondere die zur Einstellung eines geeigneten pH-Wertes und Trockensubstanzgehalts, reduziert werden.

Diese Aufgabe wird erfindungsgemäß dadurch gelöst,
- dass vor der hydrothermalen Karbonisierung die Biomasse durch Entwässerung auf Werte über 10 % Trockensubstanzanteil aufkonzentriert wird,
- dass vor der hydrothermalen Karbonisierung die Biomasse auf einen pH-Wert kleiner 4 gebracht wird, wenn der pH-Wert über 4 liegt, und
- dass die durch die hydrothermale Karbonisierung entstandene Prozess-Abwärme zum anschließenden Trocknen des entstandenen Produkts verwendet wird.

Ferner wird die Aufgabe dadurch gelöst,
- dass die Eingangsstoffe vor jeder Batch charakterisiert werden,
- dass unterschiedliche Eingangsstoffe vor jeder Batch gezielt gemischt werden,
- dass der Ausgangsstoff einer jeden Batch oder das Gemisch mehrerer Batchs nach stofflichen Eigenschaften analysiert wird,
- dass der Ausgangsstoff einer jeden Batch oder das Gemisch mehrerer Batchs abhängig von den festgestellten Eigenschaften mit dem einer anderen Batch oder Gemischen mehrerer Batchs gezielt vermischt wird.

Ein solches Verfahren führt zu folgenden Vorteilen:
- Eine wesentliche Beschleunigung des Verfahrens, so dass schon nach ca. 3 bis 5 Stunden die Karbonisierung abgeschlossen ist und ein Brennstoff in Braunkohlequalität oder besser entnommen werden kann.
- Das Verfahren ist äußerst wirtschaftlich.
- Der apparative Aufwand ist verhältnismäßig gering.
- Die Anlage ist bei geringen Außenabmessungen sehr kompakt.
- Behandlung von Abwasser als Eingangsstoff, dadurch Ersatz ganzer Kläranlagen.
- Weitere Beschleunigung des Verfahrens durch Katalysatoren.
- Nutzung des Produkts zur anschließenden Weiterbehandlung im Fischer-Tropsch-Verfahren.
- Nutzung des Verfahrens zur Abtrennung von Phosphor, Phosphorverbindungen und Schwermetallen vom Klärschlamm.
- Nutzung des Verfahrens zur Komprimierung von Biomassen.
- Nutzung des Verfahrens zur Stabilisierung von Biomassen.
- Anwendung auf andere Biomassen, wie z. B. Gärreste, Trester, Rapspresskuchen, Lebensmittelabfälle, Algen, Grünschnitt ....
- Verwendung von Rohrreaktoren zum kontinuierlichen Betrieb statt Batch • Betrieb.
- Konvertierung der Biomasse in gasförmige oder flüssige Form.
- Direkte Verstromung des Produkts durch Brennstoffzellen.
- Nutzung des Produkts als Aktivkohle Ersatz.
- Nutzung des Produkts zur Oberflächenbehandlung.
- Nutzung des Produkts als Füllstoff.
- Nutzung des Verfahrens zum Entzug von CO2 aus dem Klimakreislauf.
- Nutzung des Verfahrens zur dauerhaften Bindung und zur Deponierung von CO2.

Ein solches Verfahren führt zudem zu folgenden Vorteilen:
- Durch Mischungen von Eingangsstoffen (z. B. Klärschlamm und Lebensmittelreste) wird die der HTC zugeführte Biomasse in ihren Eigenschaften standardisiert und damit zuverlässig und wiederholbar behandelbar.
- Das Mischungsverhältnis der Eingangsstoffe wird in der Art eingestellt, dass gewünschte Eigenschaften des Ausgangsstoffs, wie z. B. Brennwert oder Aschegehalt, erreicht werden.
- Durch Beimischung milchsäurebildender Biomasse wie z. B. Grassilage oder Fruchtresten wie z. B. Apfelschalen oder Zitrusfruchtschalen wird der pH-Wert des Eingangsstoffgemischs erniedrigt und Chemikalien zur Einstellung des pH-Werts eingespart.
- Das Endprodukt wird durch gezielte Vermischung verschiedener Batches in seinen Eigenschaften vergleichmäßigt und genügt notwendigen Mindestanforderungen zur Weiterverwendung wie z. B. einem minimalen Brennwert.

Besonders vorteilhaft ist es, dass die hydrothermale Karbonisierung im Batch-Prozess unter sehr gut definierten Bedingungen durchgeführt wird und die Fahrweise präzise auf die jeweiligen Eigenschaften der Eingangsstoffe und die gewünschten Eigenschaften des Ausgangsstoffs abgestimmt wird.

Höchst vorteilhaft ist es, dass bei hochviskosen Einsatzstoffen im Batch-Reaktor das Material zuerst ohne Rühren auf die Reaktionstemperatur gebracht wird, um einen Teil der Hydrokolloide abzubauen, was zu einer Verflüssigung des Materials führt und den anschließenden Einsatz eines Rührwerks ohne Belastung der Mechanik erlaubt.

Erhebliche Vereinfachung der Entwässerung des Kohleschlamms nach der HTC wird erreicht, wenn trockene Biomasse den Eingangsstoffgemisch zugemischt wird, um den Trockensubstanzanteil zu erhöhen. Dies ermöglicht außerdem eine bessere exotherme Reaktion und eine höhere Menge an Wärme, die während der HTC abgegeben wird und für die anschließende Trocknung zur Verfügung steht.

Höchst vorteilhafte Ausführungen sind in den weiteren Unteransprüchen aufgeführt.

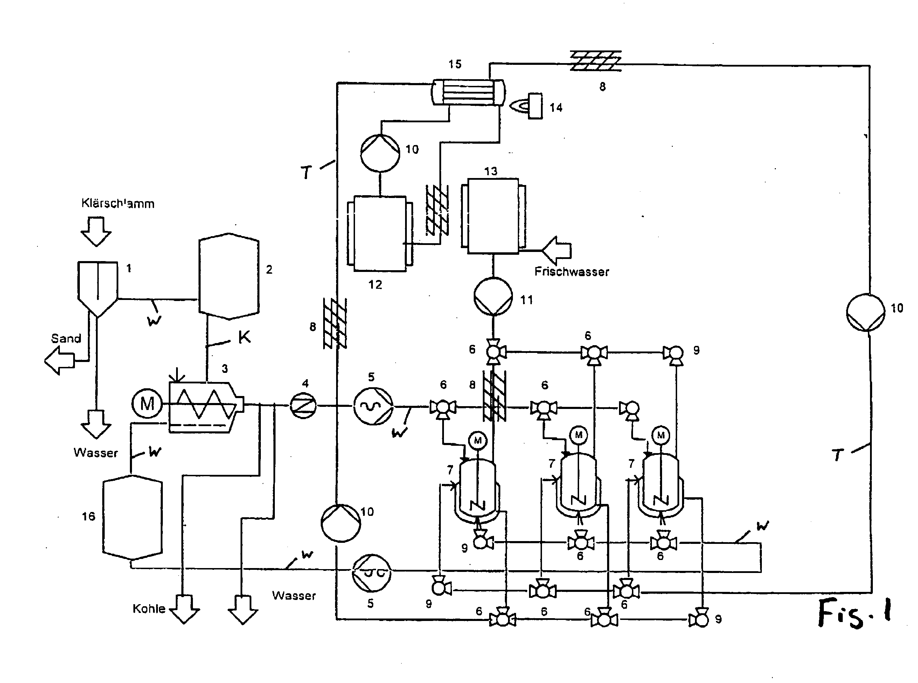

Vorteilhafte beispielhafte Ausführungen des erfindungsgemäßen Verfahrens werden im Folgenden beschrieben. Hierbei zeigen die Zeichnungen Ausführungen in einfacher schematischer Darstellung. Es zeigen
- Fig. 1: eine erste Anlage zum Herstellen von Kohle,

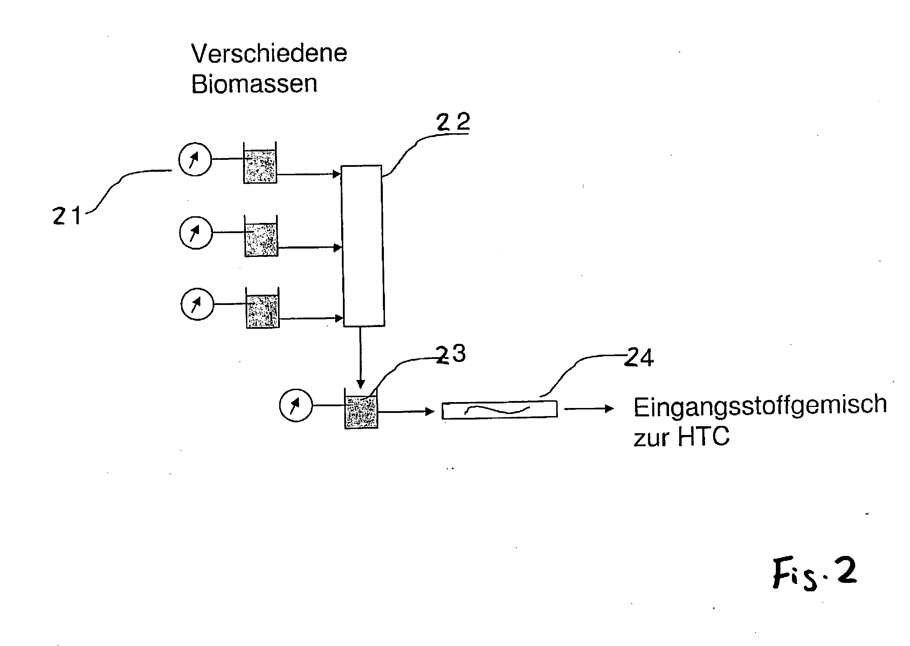

- Fig. 2: eine vorgeschaltete Mischanlage,

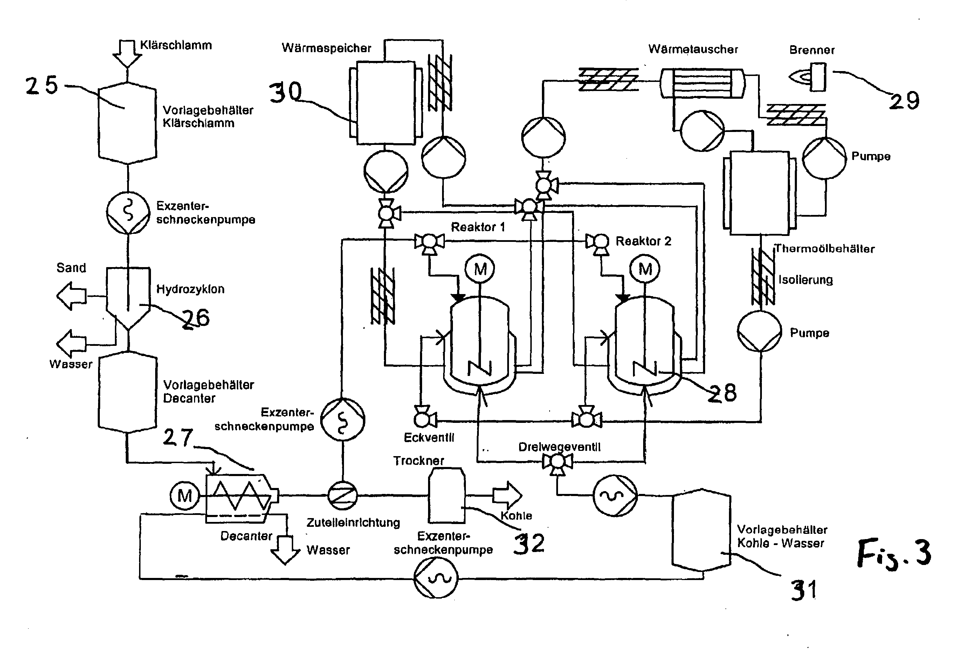

- Fig. 3: eine zweite Anlage zum Herstellen von Kohle,

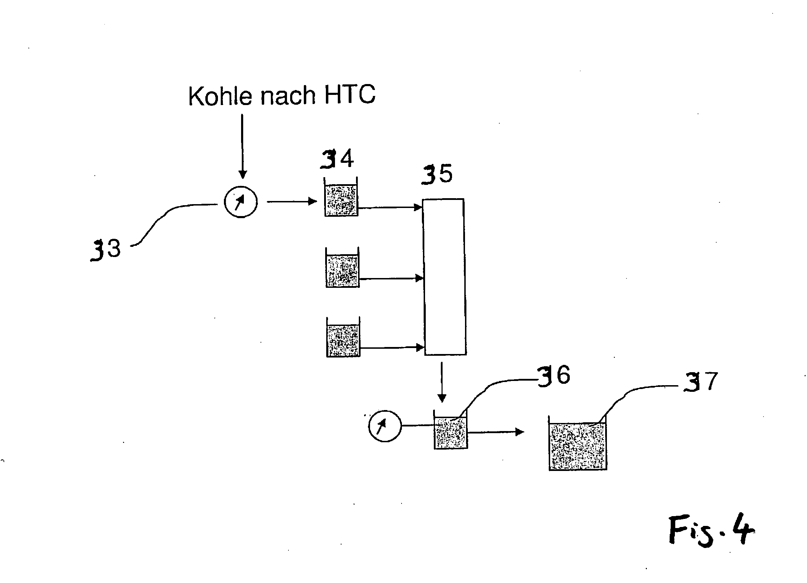

- Fig. 4: eine nachgeschaltete Mischanlage.

Die mineralischen Anteile von Klärschlamm, der mit etwa 1 - 5 % TS (Trockensubstanz) Gehalt auf Kläranlagen anfällt, werden in einem Hydrozyklon 1 von den organischen Anteilen abgetrennt und als Sand entsorgt. Im nachfolgenden Vorlagebehälter 2 erfolgt die Einstellung des pH-Wertes auf Werte unter pH4 und die Beimischung von Hilfsstoffen wie Polymere oder Katalysatoren. In einem Dekanter 3 wird der Klärschlamm auf Werte über 10 % TS Gehalt aufkonzentriert, um damit eine exotherme Reaktion in den Reaktoren zu ermöglichen.

Ober Dosiereinrichtungen 4, Pumpen 5 und Ventile 6 werden parallel angeordnete Reaktoren beschickt 7. Diese verfügen zur Verbesserung der Reaktion über ein Rührwerk. Alternativ können auch Rohrreaktoren verwendet werden, die eine gute Durchmischung des Klärschlamms sicherstellen.

Die bei der Reaktion entstehende Abwärme wird über einen Thermoölkreislauf der anschließenden Trocknung zugeführt.

Zum Anfahren des Prozesses wird Wärme über einen Brenner 14 zugeführt. Durch die Verwendung mehrerer Reaktoren kann auf Wärmezuführung während des laufenden Betriebes der Anlage verzichtet werden, da die Abwärme eines laufenden Reaktors zum Anfahren eines neu beschickten Reaktors genutzt wird.

Aus einem Frischwasserbehälter kann eine Verdünnung des Reaktorinhalts zur Verlangsamung und ggf. Unterbrechung der Karbonisierung erfolgen.

Der resultierende Kohleschlamm wird über Ventile 6 abgeführt und über einen weiteren Vorlagebehälter 16 dem Dekanter 3 zur abschließenden Entwässerung auf > 50 % TS Gehalt zugeführt.

Optional wird zur Verbesserung der Entwässerung eine Benetzung der Kohleschlammpartikel mit Öl oder eine Zugabe anderer Hilfsmittel im gleichen Vorlagebehälter erfolgen. Ebenso wird hier optional das Trübwasser über dem angesetzten Schlamm abgezogen.

Die entstandene Kohle wird einer abschließenden Trocknung zugeführt. Wertstoffe, insbesondere Phosphor, werden nach einer Monoverbrennung der entstandenen Kohle aufgrund der hohen Konzentrationen aus der Asche wirtschaftlich wiedergewonnen. Das Wasser enthält nach der Reaktion einen hohen Anteil der ursprünglich im Klärschlamm enthaltenen Schwermetalle, welche in nachfolgenden Schritten durch Fällungsreaktionen gebunden und sicher entsorgt werden.

Verschiedene Biomassen werden in separaten Vorlagebehältern mittels geeigneter Messtechnik charakterisiert 21. In einer anschließenden Mischstufe 22 wird das Eingangsstoffgemisch für die HTC je nach gewünschten Eigenschaften hergestellt. Dabei können z. B. Orangenschalen beigefügt werden, um den pH-Wert des Eingangsstoffgemischs zu reduzieren oder getrocknete Biomasse beigemischt werden, um den Trockensubstanzanteil des Eingangsstoffgemischs zu erhöhen. Ebenso können Biomassen mit hohem Kohlehydratgehalt wie Lebensmittelreste mit Biomasse mit niedrigem Kohlehydratanteil wie Klärschlamm beigemischt werden, um einen ausreichenden Brennwert des Endproduktes zu erreichen. Anschließend kann das Eingangsstoffgemisch nochmals charakterisiert werden 23. Eine Transporteinheit 24 führt das Gemisch der HTC zu.

In der HTC wird der Eingangsstoff (z. B. Klärschlamm, Grünschnitt etc.) homogenisiert 25 und falls notwendig einer Vorabtrennung von Inert- und Störstoffen unterzogen. Dies kann z. B. in einem Hydrozyklon 26 erfolgen. Durch einen Hydrozyklon kann eine teilweise Entwässerung stattfinden. Es wird dann beispielsweise in einem Dekanter 23 eine Mischung aus Biomasse und Wasser hergestellt mit einem typischen Feststoffgehalt von 25 % oder mehr. Diese wird gegebenenfalls durch die Abwärme des vorherigen Prozessschrittes (Wärme des Produktes) vorgewärmt. Die vorgewärmte Mischung wird in den Reaktionsbehälter 28 gebracht. Durch Zufuhr von Wärmeenergie wird der Reaktor auf eine Temperatur zwischen 160 und 230°C gebracht. Der vorhandene Sauerstoff wird in der Anfangsphase durch den entstehenden Wasserdampf ausgetrieben. Der Reaktor wird anschließend druckdicht verschlossen. Die benötigte Wärmeenergie stammt entweder aus einer Zufeuerung 29 oder aus einem Wärmespeicher 30, der im vorherigen Prozessschritt durch Abwärme aus der Reaktion gespeist wurde. Die Reaktion läuft dann unter Wärmeentwicklung ab. Diese Wärme wird zur erneuten Speisung des Latentwärmespeichers verwendet.

Nach Ablauf der Reaktion wird der Reaktor auf Umgebungsdruck entspannt und der erzeugte Kohleschlamm in einen Speicherbehälter 31 abgeführt. Die Abwärme wird zum Vorwärmen der nächsten Batches verwendet. Das erzeugte Produkt "Kohleschlamm" kann dann mechanisch oder mechanisch/thermisch entfeuchtet und getrocknet werden (32). Der Einsatz von zwei Reaktoren im Parallelbetrieb 28 biete außerdem die Möglichkeit, Reaktionswärme, die in den einen Reaktor frei wird, direkt für den Start einer weiteren Reaktion zu nutzen.

Die entstandene Kohle wird nach der Herstellung nach ihren wesentlichen Eigenschaften durch geeignete Messtechnik 33 charakterisiert. Dies können z. B. Brennwert, Aschegehalt oder Schadstoffe sein. Daraufhin wird die Kohle beispielsweise in separaten Chargen 34 gelagert und in einer nachfolgenden Stufe 35 mit anderen Chargen in der Art vermischt, dass die entstandene Mischung eine gewünschte Eigenschaft erhält. Dies kann beispielhaft eine gleich bleibende Qualität sein oder eine Mindestqualität wie z. B. einen minimalen Brennwert von 15,000 J/g. Die entstandene Mischung wird anschließend auf die wesentlichen Eigenschaften hin mittels geeigneter Messtechnik 36 untersucht und freigegeben. Das Endprodukt wird dann in einem Behälter zur weiteren Verwertung gelagert 17.

Da es sich bei der Biomasse um abrasive und hochviskose Masse handelt, hat sich die Verwendung von Pumpen als höchst vorteilhaft erwiesen, die typischerweise in Anwendungen wie Bergbau, Erdölgewinnung oder Straßen/Gebäudebau eingesetzt werden. Diese Pumpen verfügen üblicherweise über eine hohe Förderleistung und bieten, trotz der Feststoffe im zu pumpenden Medium, beispielsweise durch ausreichend große Dichtflächen, eine Abdichtung gegen einen anstehenden Gegendruck. Weiterhin ist für eine zuverlässige Beschickung des Förderelements mit einem hochviskosen und schlecht fließenden Medium eine ausreichend große Vorlagevorrichtung notwendig. Diese Pumpen sind damit naturgemäß in ihrer größenmäßigen Auslegung nach unten hin beschränkt. Um die erfindungsgemäße Aufgabe einer kompakten Anlage zu erfüllen, ist es notwendig, die Pumpen zur Beschickung der Reaktoren in ihrer Leistung zu drosseln, da ansonsten in einem kontinuierlichen Betrieb durch einen überhöhten Volumendurchsatz eine geringere Aufenthaltsdauer der Biomasse unter den Reaktionsbedingungen und damit eine Verschlechterung der Produktqualität resultieren würde. Es hat sich dabei als höchst vorteilhaft erwiesen, die Pumpen im Intervallbetrieb oder mit geringerer Antriebsgeschwindigkeit zu betreiben.

Die Stoffströme sind in den Zeichnungen wie folgt bezeichnet:
- K =: Klärschlamm und Kohle
- T =: Thermoölkreislauf
- W =: Wasser

### Legende Bauteile:

- 1 -: Hydrozyklon
- 2 -: Vorlagebehälter 1 für Dekanter
- 3 -: Dekanter
- 4 -: Zuteileinrichtung/Dosiereinrichtung
- 5 -: Exzenterschneckenpumpe
- 6 -: Dreiwegeventil
- 7 -: Reakator (Doppelwandiger Behälter mit Rührer und isoliert)
- 8 -: Isolierung
- 9 -: Eckventil
- 10 -: Thermoölpumpe
- 11 -: Wasserpumpe
- 12 -: Thermoölbehälter
- 13 -: Wasserbehälter
- 14 -: Brenner
- 15 -: Rohrbündelwärmetauscher
- 16 -: Vorlagebehälter 2 Dekanter

## Patentansprüche

1. Verfahren zum Herstellen von Kohle insbesondere von Kohleschlamm aus feuchter Biomasse insbesondere aus Klärschlamm durch hydrothermale Karbonisierung, wobei die Kohlenstoffstrukturen der Biomasse, vorzugsweise bei mindestens 180 bis 200 °C unter Luftabschluss aufgebrochen werden,
**dadurch gekennzeichnet,**
- **dass** vor der hydrothermalen Karbonisierung die Biomasse durch Entwässerung auf Werte über 10 % Trockensubstanzanteil aufkonzentriert wird,
- **dass** vor der hydrothermalen Karbonisierung die Biomasse auf einen pH-Wert kleiner 4 gebracht wird, wenn der pH-Wert über 4 liegt, und
- **dass** die durch die hydrothermale Karbonisierung entstandene Prozess-Abwärme zum anschließenden Trocknen des entstandenen Produkts verwendet wird.

2. Verfahren nach Anspruch 1, **dadurch gekennzeichnet, dass** vor der hydrothermalen Karbonisierung mineralische Anteile aus der Biomasse abgetrennt werden.

3. Verfahren nach Anspruch 1 oder 2, **dadurch gekennzeichnet, dass** die Kohlepartikel des durch die hydrothermale Karbonisierung entstandenen Kohleschlamms zur Entwässerung mit Öl benetzt werden.

4. Verfahren nach einem der vorherigen Ansprüche, **dadurch gekennzeichnet, dass** die hydrothermale Karbonisierung unter Verwendung eines Rührwerkes erfolgt.

5. Verfahren nach einem der vorherigen Ansprüche, **dadurch gekennzeichnet, dass** es durch Einsatz von Katalysatoren beschleunigt wird.

6. Verfahren nach einem der vorherigen Ansprüche, **dadurch gekennzeichnet, dass** während der hydrothermalen Karbonisierung Schadstoffe wie Schwermetalle abgetrennt und Wertstoffe wie Phosphor rückgewonnen werden, in dem sie aus den festen Bestandteilen in die Flüssigphase übergehen und durch das spätere Entwässern abgeschieden werden.

7. Verfahren nach einem der vorherigen Ansprüche, **dadurch gekennzeichnet, dass** als Biomasse Gärreste, Trester, Rapspresskuchen, Lebensmittelabfälle, Grünschnitt und/oder Algen verwendet werden.

8. Verfahren nach einem der vorherigen Ansprüche, **dadurch gekennzeichnet,**
- **dass** die Eingangsstoffe vor jeder Batch charakterisiert werden,
- **dass** unterschiedliche Eingangsstoffe vor jeder Batch gezielt gemischt werden,
- **dass** der Ausgangsstoff einer jeden Batch oder das Gemisch mehrerer Batchs nach stofflichen Eigenschaften analysiert wird,
- **dass** der Ausgangsstoff einer jeden Batch oder das Gemisch mehrerer Batchs abhängig von den festgestellten Eigenschaften mit dem einer anderen Batch oder Gemischen mehrerer Batchs gezielt vermischt wird.

9. Verfahren nach einem der vorherigen Ansprüche, **dadurch gekennzeichnet, dass** als Eingangsstoffe unterschiedliche Arten von Biomasse verwendet werden.

10. Verfahren nach einem der vorherigen Ansprüche, **dadurch gekennzeichnet, dass** der pH-Wert der Mischung durch mindestens eine der vermischten Biomassenarten erniedrigt wird.

11. Verfahren nach einem der vorherigen Ansprüche, **dadurch gekennzeichnet, dass** der Feststoffgehalt des Gemischs durch mindestens eine der vermischten Biomassenarten erhöht wird.

12. Verfahren nach einem der vorherigen Ansprüche, **dadurch gekennzeichnet, dass** die Ausgangsstoffe einzelner Batchs schwankende Eigenschaften, insbesondere Brennwerteigenschaften, haben und durch gezielte Vermischung eine gewollte Eigenschaft, insbesondere Brennwerteigenschaft, des Mischprodukts erhalten wird.

13. Verfahren nach einem der vorherigen Ansprüche, **dadurch gekennzeichnet, dass** die Ausgangsstoffe einzelner Batchs zum Teil keine ausreichende Eignung für weitere Verwendungen haben und durch gezielte Vermischung eine ausreichende Eignung des Mischprodukts für weitere Verwendungen erhalten wird.

14. Verfahren nach einem der vorherigen Ansprüche, **dadurch gekennzeichnet, dass** die Prozessparameter je nach Mischungsverhältnis und Eigenschaften von Eingangsstoffen während jeder Batch angepasst werden können.

15. Verfahren nach einem der vorherigen Ansprüche, **dadurch gekennzeichnet, dass** die Fördereinrichtung, insbesondere Pumpe, die die Biomasse in einen druckerhöhten Bereich der Anlage befördert, gegenüber ihrer konstruktiven Auslegung oder gegenüber anderen typischen Anwendungen dieser Fördereinrichtung, in ihrer Förderleistung um mindestens 50 % gedrosselt wird, insbesondere durch Intervallbetrieb oder Verlangsamung der Fördergeschwindigkeit.

16. Vorrichtung zum Durchführen des Verfahrens nach einem der vorherigen Ansprüche.

17. Verfahren nach einem der vorherigen Ansprüche, **dadurch gekennzeichnet, dass** nach 2 bis 6 Stunden, vorzugsweise 3 bis 5 Stunden, ein Schlamm mit einem Brennstoff mit mindestens Braunkohlequalität entnommen wird.
